# EUROPÄISCHE PATENTSCHRIFT

(11) **EP 2 525 138 B1**
(45) Veröffentlichungstag und Bekanntmachung des Hinweises auf die Patenterteilung: **16.10.2013**
(21) Anmeldenummer: 11166755.6
(22) Anmeldetag: 19.05.2011
(51) Int. Cl.: F21S 8/10, B60Q 1/50, B29C 45/14

(54) **Kraftfahrzeugleuchte und Verfahren zu deren Herstellung**
Motor vehicle lighting and method for its production
Phare de véhicule automobile et son procédé de fabrication

(43) Veröffentlichungstag der Anmeldung: 21.11.2012
(73) Patentinhaber: odelo GmbH, 71409 Schwaikheim (DE)
(72) Erfinder: Ricking, Thorsten, 71364, Winnenden (DE); Melzer, Horst, 71364, Winnenden (DE)
(74) Vertreter: Benninger, Johannes

(56) Entgegenhaltungen:
- EP-A1- 1 072 383
- EP-A1- 1 930 925
- DE-A1- 4 433 580
- DE-A1- 10 234 125
- DE-A1-102009 021 354
- DE-A1-102009 041 244
- DE-U1-202004 004 917

## Beschreibung

Die Erfindung betrifft eine Kraftfahrzeugleuchte gemäß dem Oberbegriff des Anspruchs 1 sowie ein Verfahren zur Herstellung einer solchen Kraftfahrzeugleuchte gemäß dem Oberbegriff des Anspruchs 14.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Kammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine aktuelle Entwicklung sieht eine von außen erkennbare, hinterleuchtete Grafik bei insbesondere als Heckleuchten ausgebildeten Kraftfahrzeugleuchten beispielsweise zu deren Kennzeichnung vor. Bei der Grafik kann es sich um ein oder mehrere Bilder, Zeichen, Logos, Schriftzeichen, wie etwa Buchstaben, Ziffern, etc. oder um eine oder mehrere Kombinationen hieraus handeln, um nur einige denkbare Ausgestaltungen von Grafiken aufzuzählen.

Angedacht ist hierzu ein Beleuchtungsmodul mit einer eigenen, die hinterleuchtete Grafik tragenden Modullichtscheibe in der Kraftfahrzeugleuchte unterzubringen. Das Beleuchtungsmodul beherbergt hierbei ein eigens zur Hinterleuchtung vorgesehenes und separat elektrisch zu kontaktierendes Leuchtmittel mit mindestens einer Lichtquelle. Um die Grafik in die Modullichtscheibe einzubringen wird überlegt, diese als Negativ oder als Positiv auszubilden. Bei einer Ausbildung als Negativ kann vorgesehen sein, die Modullichtscheibe zunächst vollständig von innen oder außen mit Aluminium zu beschichten und anschließend die Grafik mit einem Laserstrahl freizumachen. Bei einer Ausbildung als Positiv kann vorgesehen sein, eine Foliengrafik im Heißprägeverfahren auf die Modullichtscheibe aufzubringen. Das fertige Beleuchtungsmodul wird anschließend im Leuchtengehäuse montiert.

Nachteilig hieran sind die hohen Kosten der aufwändigen Verfahren zur Herstellung insbesondere der Modullichtscheibe des separaten Beleuchtungsmoduls.

Weitere Nachteile ergeben sich dadurch, dass das Herstellen einer lichtdichten Lichtscheibe im Bedampfungsprozess prozesssicher nur sehr schwer möglich ist. Ebenso ist ein Heißprägeprozess hinsichtlich der optischen Eigenschaften und der erforderliche Prozessstabilität als kritisch zu bewerten.

Ein wesentliches Ziel bei der Entwicklung von Kraftfahrzeugkomponenten, zu denen auch Kraftfahrzeugleuchten zählen, ist eine Verringerung deren Herstellungs- und Montageaufwands und damit deren damit einhergehenden Kosten. Dies zu erreichen wird einerseits durch möglichst einfache und zuverlässige Herstellungsverfahren und andererseits durch möglichst wenig und einfache Montageschritte versucht.

Kraftfahrzeugleuchten bestehend aus vielen einzeln herzustellenden und zusammenzusetzenden Bauteilen, wie die zuvor beschriebenen Kraftfahrzeugleuchten mit hinterleuchteter Grafik, stehen diesem Ziel entgegen.

Durch DE 10 2006 057 653 A1 ist ein dreidimensional verformbares Folienelement aus einer zumindest teilweise transparenten Trägerfolie, einer semitransparenten Spiegelschicht, einer weiteren zumindest teilweise transparenten Folie, einem Elektrolumineszenz-Element und einer Schutzschicht oder weiteren Folie bekannt. Das Folienelement dient der Zurverfügungstellung einer vermittels des Elektrolumineszenz-Elements hinterleuchteten, durch die zumindest teilweise transparente Folie gebildeten Grafik.

Durch DE 10 2009 041 243 A1 und durch DE 10 2009 041 244 A1 sind zum Herstellen von Formkörpern das so genannte In-Mold-Labeling (IML) und In-Mold-Decoration (IMD) bekannt. Mit diesen Verfahren werden in einem Spritzgießwerkzeug mehrschichtige Strukturen geschaffen. Sie umfassen Prozesse, bei denen flächige, ebene oder bereits geformte, oder strukturierte Substrate, Folien mit einer Materialmasse, zum Beispiel mit Kunststoff, metall- oder glashaltigen Materialien hinterspritzt oder hinterschäumt werden. Vorgeformte Folien beispielsweise aus Kunststoff, wie Polycarbonat oder Holzfurnier erhalten vor der Hinterspritzung die gewünschte endgültige dreidimensionale Form in einem Verformungsprozess und können zumindest teilweise bedruckt sein. Zur Herstellung einer Gerätefront mit hinterleuchteten Bedienmitteln ist dabei die Verwendung eines vorgefertigten Folieneinlegers vorgesehen, der transparent, kratzfest, lichtstabil und teilweise bedruckt ist, stabile Randgebiete hat, bereits die endgültige Oberflächenform der Gerätefront festlegt, eine lichtdurchlässige Schicht aufweist, die als Lichtleiter ausgeführt ist, sowie eine lichtundurchlässige Schicht aufweist, die durch ihre Materialeigenschaften und Gestaltung den unkontrollierten Austritt von Nebenlicht an beleuchteten bzw. hinterleuchteten Bereichen der Gerätefront verhindert. Zur Herstellung eines be- bzw. hinterleuchteten Bedienelements kann der Folieneinleger dreidimensional geformt sein.

Durch DE 20 2007 008 195 U1 ist eine Kraftfahrzeugleuchte mit einer Vielzahl von Leuchtmitteln bekannt, bei der bei eingeschalteter Lichtfunktion eine Grafik durch eine im Vergleich zu den verbleibenden Leuchtmitteln zumindest zeitweilig größere oder geringere Helligkeit mindestens eines in Form der Grafik angeordneten Teils der Leuchtmittel hervorgehoben ist.

Durch EP 1 930 925 A1 ist ein Dekor - oder Funktionsbauteil mit zur zumindest einer hinterleuchteten Grafik bekannt. Das Bauteil umfasst mindestens eine sichtbare, mit wenigstens einer zumindest eine von wenigstens einer mit der zumindest einen Grafik versehenen Folie abgedeckte Lichtöffnung aufweisenden Ausnehmung versehen Partie. Die Folie ist unter Freilassung wenigstens der Grafik mit den die Ausnehmung umgebenden Wandungen und/oder dem die Ausnehmung umgebenden Teil der Partie durch Spritzgießen verbunden. Das Bauteil umfasst als ein in der Ausnehmung beherbergtes, die Hinterleuchtung der Grafik besorgendes Leuchtmittel ausgeführte Mittel zum Einstrahlen von Licht in die vermittels der Folie an ihrer Lichtöffnung verschlossene Ausnehmung.

Durch DE 10 2009 041 244 A1 ist ferner ein als Bedienelement eines Geräts vorgesehener Formkörper mit einer hinterleuchteten Grafik bekannt. Das Bedienelement besteht aus einem spritzgegossenen Verbundkörper mit einer mit der Grafik versehenen Folie, einer opaken Schicht und einer transparenten Schicht. Die opake Schicht bildet ein opakes Randgebiet, um ein unerwünschtes Austreten von Licht aus dem Bedienelement zu verhindern. Die sich zwischen den durch die opake Schicht gebildeten opaken Randgebieten befindliche transparente Schicht ist als Lichtleiter ausgeführt, um eine gleichmäßige Lichtverteilung im Bedienelement sicherzustellen. Das Licht wird von einer Lichtquelle ausgestrahlt, welche sich hinter jedem Bedienelement befindet.

Durch DE102 34 125 A1 ist ein als spritzgegossenes Formteil ausgeführtes Bedienelement mit einer Elektrolumineszenzfolie bekannt.

Der Erfindung liegt die Aufgabe zu Grunde, eine Kraftfahrzeugleuchte mit einer hinterleuchteten Grafik und ein Verfahren zur Herstellung einer solchen Kraftfahrzeugleuchte zu entwickeln, vermittels denen ein nachhaltig verringerter Herstellungs- und Montageaufwand und damit einhergehend verringerte Herstellungskosten erzielt werden.

Die Aufgabe wird jeweils gelöst mit den Merkmalen der unabhängigen Ansprüche.

Ein erster Gegenstand der Erfindung betrifft demnach eine Kraftfahrzeugleuchte mit einem von einem Leuchtengehäuse und einer Lichtscheibe umschlossenen Leuchteninnenraum und mindestens einem in dem Leuchteninnenraum untergebrachten Leuchtmittel zur Erfüllung mindestens einer Lichtfunktion der Kraftfahrzeugleuchte. Die Kraftfahrzeugleuchte beherbergt zumindest eine von außerhalb des Leuchteninnenraums beispielsweise durch die Lichtscheibe hindurch sichtbare, hinterleuchtete Grafik. Hierfür verfügt die Kraftfahrzeugleuchte über mindestens eine von außerhalb des Leuchteninnenraums beispielsweise durch die Lichtscheibe hindurch sichtbare Partie. Die Partie kann opak oder transparent sein. Die mindestens eine Partie ist wenigstens mit zumindest einer Ausnehmung versehen. Die Ausnehmung weist wenigstens eine beispielsweise der Lichtscheibe zugewandte Lichtöffnung auf. Die Lichtöffnung ist von einer Folie abgedeckt. Die Folie ist mit der Grafik versehen. Die Folie ist unter Freilassung wenigstens der Grafik mit den die Ausnehmung umgebenden Wandungen und/oder dem die Ausnehmung umgebenden Teil der Partie durch Spritzgießen verbunden. Die Kraftfahrzeugleuchte verfügt über Mittel zum Einstrahlen von Licht in die vermittels der Folie an ihrer beispielsweise der Lichtscheibe zugewandten Lichtöffnung verschlossene Ausnehmung.

Dadurch ist die auf die die beispielsweise der Lichtscheibe zugewandte Lichtöffnung abdeckende Folie aufgebrachte Grafik hinterleuchtet und beispielsweise durch die Lichtscheibe hindurch sichtbar.

Die Mittel zum Einstrahlen von Licht in die vermittels der Folie an ihrer Lichtöffnung verschlossene Ausnehmung umfassen wenigstens einen Licht von mindestens einem Leuchtmittel von einer der Lichtöffnung abgewandten Seite her in die Ausnehmung leitenden Lichtleiter und/oder wenigstens einen Licht von einem Leuchtmittel von einer der Lichtöffnung abgewandten Seite her in die Ausnehmung reflektierenden Reflektor.

Die Folie wird beispielsweise in einem Druckverfahren mit der Grafik versehen.

Die Partie kann einen Teil des Leuchtengehäuses und/oder zumindest einen Teil beispielsweise mindestens eines im Leuchteninnenraum untergebrachten Bauteils der Kraftfahrzeugleuchte umfassen, beispielsweise mindestens einen wenigstens einem zur Besorgung zumindest einer Lichtfunktion der Kraftfahrzeugleuchte vorgesehenen Leuchtmittel zugeordneten Reflektor. Das Leuchtengehäuse kann außerdem als ein Reflektorgehäuse ausgebildet sein. Bei einem Reflektorgehäuse kann ein gegebenenfalls entsprechend ausgeformter Teil der dem Leuchteninneraum zugewandten Innenoberfläche des Leuchtengehäuses beispielsweise vermittels einer reflektierenden Beschichtung für das von mindestens einer zur Erfüllung zumindest einer Lichtfunktion vorgesehenen Lichtquelle wenigstens eines Leuchtmittels abgestrahlte Licht reflektierend ausgeführt sein.

Beispielsweise können die Mittel zum Einstrahlen von Licht in die vermittels der Folie an ihrer beispielsweise der Lichtscheibe zugewandten Lichtöffnung verschlossene Ausnehmung mindestens ein in der Ausnehmung beherbergtes, die Hinterleuchtung der Grafik besorgendes Leuchtmittel umfassen.

Das Leuchtmittel kann wenigstens eine Lichtemittierende Diode (LED) und/oder einen LED-Chip sowie gegebenenfalls einen Lichtleiter umfassen.

Die Ausnehmung kann zu einer der Lichtöffnung abgewandten Seite hin, beispielsweise zur der Lichtscheibe abgewandten Seite hin verschlossen oder offen ausgebildet sein. Im Falle einer beispielsweise zur der Lichtscheibe abgewandten Seite offenen Ausnehmung kann die Hinterleuchtung beispielsweise durch mindestens ein für wenigstens eine Lichtfunktion der Kraftfahrzeugleuchte vorgesehenes Leuchtmittel mit besorgt sein.

Die Ausnehmung kann mit einer reflektierenden Oberfläche versehen sein, beispielsweise in Form einer z.B. reflektierenden Beschichtung.

Die Grafik kann als Negativ oder Positiv ausgebildet sein, d.h. die Grafik kann durchscheinend oder abschattend in einem ansonsten opaken oder transparenten, die Grafik umgebenden Bereich der Folie ausgebildet sein.

Die Grafik kann zumindest zum Teil als Negativ ausgebildet sein. Hierbei tritt das die Hinterleuchtung besorgende Licht vom Leuchtmittel her gesehen durch die Grafik durch die Folie hindurch. Die Grafik selbst wirkt dabei durchscheinend.

Die Grafik kann zumindest zum Teil als Positiv ausgebildet sein. Hierbei tritt das die Hinterleuchtung besorgende Licht vom Leuchtmittel her gesehen um die Grafik herum durch die Folie hindurch. Die Grafik selbst wirkt dabei abschattend.

Die Grafik kann ein oder mehrere Schriftzeichen, wie etwa Ziffern und/oder Buchstaben, und/oder Bilder und/oder Zeichnungen und/oder grafische Darstellungen umfassen.

Besonders bevorzugt ist die Grafik als ein Markenzeichen oder Logo ausgebildet, vorzugsweise eines Herstellers von Kraftfahrzeugen, in welche die Kraftfahrzeugleuchte zum Einbau vorgesehen ist.

Alternativ oder zusätzlich kann die Grafik Prüfzeichen und/oder Zulassungszeichen umfassen, welche im beleuchteten Zustand einwandfrei sichtbar sind und im unbeleuchteten Zustand als nicht störend empfunden werden.

Der Betrieb der Hinterleuchtung, beispielsweise eines die Hinterleuchtung besorgenden Leuchtmittels, kann mit dem Betrieb einer Lichtfunktion der Kraftfahrzeugleuchte gekoppelt oder unabhängig hiervon sein. Beispielsweise kann die Hinterleuchtung dauerhaft, etwa mit Einschalten der Zündung und/oder Fahrt und/oder Aktivierung der Fahrbereitschaft und/oder Anlassen des Motors des Kraftfahrzeugs gekoppelt sein.

Die Kraftfahrzeugleuchte kann beispielsweise als Heckleuchte für ein Kraftfahrzeug ausgebildet sein.

Ein zweiter Gegenstand der Erfindung betrifft ein Verfahren zur Herstellung einer zuvor beschriebenen Kraftfahrzeugleuchte mit mindestens einer hinterleuchteten Grafik. Das Verfahren umfasst die Verfahrensschritte:
- Versehen einer Folie mit einer zu hinterleuchtenden Grafik,
- lage- und positionsrichtiges Einbringen der Folie in ein Spritzgießwerkzeug,
- Hinterspritzen der Folie zumindest mit einer von außerhalb des Leuchteninnenraums beispielsweise durch die Lichtscheibe der fertigen Kraftfahrzeugleuchte hindurch sichtbaren Partie der Kraftfahrzeugleuchte mit einem opaken oder transparenten Spritzgießwerkstoff unter Aussparung einer Ausnehmung mit mindestens einer durch die Folie abgedeckten Lichtöffnung durch Freilassung zumindest eines mit der Grafik versehenen Teils der Folie von dem Spritzgießwerkstoff und
- Einbringen von Mitteln zum Einstrahlen von Licht in die vermittels der Folie an ihrer beispielsweise der Lichtscheibe zugewandten Lichtöffnung verschlossene Ausnehmung beim Zusammenbau der Kraftfahrzeugleuchte.

Durch die Freilassung wird eine Ausnehmung in der Partie hergestellt, die eine durch die Folie verschlossene und in der von außerhalb des Leuchteninnenraums beispielsweise durch die Lichtscheibe der fertigen Kraftfahrzeugleuchte hindurch sichtbaren Partie eine beispielsweise der Lichtscheibe zugewandte Lichtöffnung aufweist.

Bei der von außerhalb der Kraftfahrzeugleuchte beispielsweise durch die Lichtscheibe hindurch sichtbaren Partie kann es sich beispielsweise ein von der Kraftfahrzeugleuchte beherbergtes Bauteil handeln, welches mit der durch die mit der Grafik versehene Folie abgedeckten Lichtöffnung versehen ist. Alternativ oder zusätzlich kann es sich bei der Partie um einen Teil des Leuchtengehäuses handeln. Beispielsweise kann die Partie Teil eines Reflektorgehäuses sein.

Die Folie wird beispielsweise in einem Druckverfahren mit der Grafik versehen. Die Grafik kann als Negativ oder Positiv ausgebildet sein, wobei die Grafik durchscheinend oder abschattend in einem ansonsten opaken oder transparenten Bereich ausgebildet sein kann.

Das Spritzgieß-Werkzeug ist so ausgebildet, dass es zumindest den mit der Grafik versehenen Teil der Folie frei von dem für die durch Spritzgießen herzustellende Partie vorgesehenen Spritzgießwerkstoff hält.

Die Folie kann nur in demjenigen Bereich der Partie vorgesehen sein, in dem die hinterleuchtete Grafik vorgesehen sein soll. Vorzugsweise wird die Folie im Spritzgieß-Werkzeug für das die mit der von außerhalb des Leuchteninnenraums beispielsweise durch die Lichtscheibe hindurch sichtbaren Lichtöffnung versehene Partie aufweisende Bauteil der Kraftfahrzeugleuchte nur im Bereich der beispielsweise als ein Schriftzug ausgeführten Grafik eingelegt und unter Freilassung wenigstens des mit der Grafik versehenen Teils der Folie hinterspritzt.

Die Folie wird im Spritzgieß-Werkzeug vorzugsweise mittels Vakuum festgehalten.

Vorzugsweise wird ein IML-Verfahren (IML: In-Mould Labeling) angewandt. Beim IML-Verfahren handelt es sich um ein Spritzguss- bzw. Spritzgießverfahren, bei dem in das Spritzguss- bzw. Spritzgießwerkzeug eingelegte Substrate wie Stoff, Papier, Furniere oder beliebig bedruckte oder strukturierte Folien hinterspritzt werden. Alternativ oder zusätzlich kann die Folie auch vermittels eines IMD-Verfahrens (IMD: In-Mould Decoration) in das Spritzgusswerkzeug eingebracht werden, bei dem die Folie im Gegensatz zum IML-Verfahren nicht in das Spritzgusswerkzeug eingelegt, sondern als ein Folienband z.B. motorisch durch das Spritzgusswerkzeug hindurch gerollt wird. Durch Sensoren werden die einzelnen Grafiken positioniert. Dieses Verfahren weist eine wesentlich bessere Qualität als das IML-Verfahren auf.

Die hinterleuchtete Grafik kann z.B. durch die Lichtscheibe hindurch sichtbar z.B. in einem im Leuchteninnenraum beherbergten Bauteil untergebracht und/oder in ein Leuchtmittel integriert sein. Alternativ oder zusätzlich ist eine Unterbringung in einem in eingebauten Zustand der Kraftfahrzeugleuchte sichtbaren, ansonsten opak ausgeführten Teil des Leuchtengehäuses denkbar.

Vorteile ergeben sich unter Anderem durch eine im Vergleich zum Stand der Technik einfache und kostengünstige Herstellung der Folie beispielsweise im Druckverfahren. Weitere Vorteile ergeben sich durch den Entfall des Aufbaus eines Beleuchtungsmoduls mit Modulgehäuse und Modullichtscheibe und nachträglichen Einbau desselben in den Leuchteninnenraum bevor dieser durch die Lichtscheibe der Kraftfahrzeugleuchte verschlossen wird. Der Bereich des Schriftzuges ist nach dem Spritzgieß-Prozess lagerichtig und positionsgenau an der richtigen Stelle der von außerhalb des Leuchteninnenraums beispielsweise durch die Lichtscheibe hindurch sichtbaren Partie der Kraftfahrzeugleuchte befestigt. Auf einer der Lichtöffnung abgewandten Seite, beispielsweise einer bei einer Unterbringung im Leuchteninnenraum der Lichtscheibe abgewandten Rückseite, müssen nur noch die für das gegebenenfalls vorgesehene Leuchtmittel der Mittel zum Einstrahlen von Licht in die vermittels der Folie an ihrer beispielsweise der Lichtscheibe zugewandten Lichtöffnung verschlossene Ausnehmung erforderlichen Elektronikbauteile zur Hinterleuchtung der Grafik montiert werden.

Weitere Vorteile gegenüber dem Stand der Technik sind, dass keine zusätzlichen teuren Herstellungs- oder Montageschritte erforderlich sind. Dies ist unter Anderem dadurch bedingt, dass das Versehen der Folie mit der Grafik besonders einfach z.B. durch Bedrucken erfolgen kann. Darüber hinaus benötigt lediglich der Spritzgießprozess zur Herstellung eines die von außerhalb des Leuchteninnenraums beispielsweise durch die Lichtscheibe der fertigen Kraftfahrzeugleuchte hindurch sichtbare Partie aufweisenden Bauteils einen zusätzlichen Prozessschritt des Einlegens der mit der Grafik versehenen Folie in das Spritzgießwerkzeug. Mit anderen Worten entfallen zusätzliche Montageschritte durch Funktionsintegration in den Spritzgießprozess.

Zusätzliche Vorteile ergeben sich beispielsweise daher, dass der Einsatz eines IML-Verfahrens eine vergleichsweise preiswerte Lösung darstellt.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: eine Kraftfahrzeugleuchte mit einer von außerhalb des Leuchteninnenraums sichtbaren, hinterleuchteten Grafik in einer perspektivischen Ansicht bei abgenommener Lichtscheibe.
- Fig. 2: einen Querschnitt durch eine Kraftfahrzeugleuchte mit einer von außerhalb des Leuchteninnenraums sichtbaren, hinterleuchteten Grafik gemäß einer ersten Ausführungsform.
- Fig. 3: einen Querschnitt durch eine Kraftfahrzeugleuchte mit einer von außerhalb des Leuchteninnenraums sichtbaren, hinterleuchteten Grafik gemäß einer zweiten Ausführungsform.
- Fig. 4: einen Ablauf der Verfahrensschritte eines Verfahrens zur Herstellung einer Kraftfahrzeugleuchte mit einer von außerhalb des Leuchteninnenraums sichtbaren, hinterleuchteten Grafik.

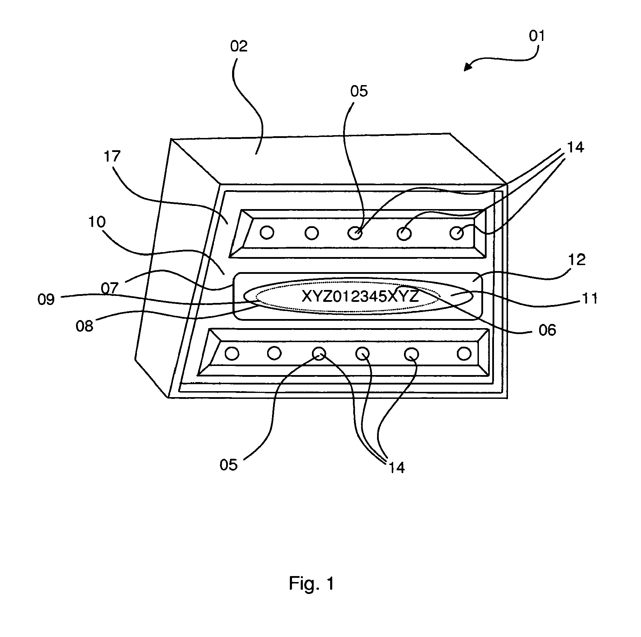

Eine in den Fig. 1 bis Fig. 3 ganz oder in Teilen dargestellte Kraftfahrzeugleuchte 01 weist einen von einem Leuchtengehäuse 02 und einer Lichtscheibe 03 umschlossenen Leuchteninnenraum 04 auf. In dem Leuchteninnenraum 04 ist mindestens ein Leuchtmittel 05 mit wenigstens einer Lichtquelle 14 zur Erfüllung mindestens einer Lichtfunktion der Kraftfahrzeugleuchte 01 untergebracht. Das Leuchtmittel 05 kann beispielsweise eine oder mehrere auf einer Platine 15 angeordnete und vermittels dieser elektrisch kontaktierte Lichtemittierende Dioden (LEDs) 16 und/oder LED-Chips sowie gegebenenfalls einen oder mehrere Lichtleiter umfassen.

Die Kraftfahrzeugleuchte 01 verfügt außerdem über zumindest eine von außerhalb des Leuchteninnenraums 04 sichtbare, hinterleuchtete Grafik 06.

Um die Kraftfahrzeugleuchte 01 mit der hinterleuchteten Grafik 06 möglichst einfach und kostengünstig herstellen und montieren zu können, verfügt die Kraftfahrzeugleuchte 01 über mindestens eine von außerhalb des Leuchteninnenraums 04 sichtbare, mit wenigstens einer zumindest eine von wenigstens einer mit der zumindest einen Grafik 06 versehenen Folie 07 abgedeckte Lichtöffnung 08 aufweisenden Ausnehmung 09 versehen Partie 10. Die Folie 07 ist unter Freilassung wenigstens der Grafik 06 mit den die Ausnehmung 09 umgebenden Wandungen 11 und/oder dem die Ausnehmung 09 umgebenden Teil 12 der Partie 10 durch Spritzgießen verbunden. Ferner verfügt die Kraftfahrzeugleuchte 01 über Mittel 13 zum Einstrahlen von Licht in die vermittels der Folie 07 an ihrer Lichtöffnung 08 verschlossene Ausnehmung 09.

Die Partie 10 und damit einhergehend die Grafik 06 können durch die Lichtscheibe 03 hindurch von außerhalb des Leuchteninnenraums 04 sichtbar sein. Die Lichtöffnung 08 ist dabei vorzugsweise der Lichtscheibe 03 zugewandt. Die Partie 10 selbst kann aus einem opaken oder transparenten Werkstoff, insbesondere einem Spritzgießwerkstoff, ausgeführt sein.

Vorzugsweise ist die Folie 07 in einem Druckverfahren mit der Grafik 06 versehen. Die Grafik 06 kann entweder auf einer ansonsten opaken Folie 07 durchscheinend oder auf einer ansonsten transparenten Folie 07 abschattend ausgebildet sein. Die durchscheinende Variante wird hierbei als Negativ bezeichnet, wobei die abschattende Variante als Positiv bezeichnet wird.

Die Partie kann zumindest einen Teil des Leuchtengehäuses 03 umfassen. In den in den Fig. 1 bis Fig. 3 dargestellten Ausführungsbeispielen umfasst die Partie 10 zumindest einen Teil mindestens eines im Leuchteninnenraum 04 untergebrachten Bauteils 17 der Kraftfahrzeugleuchte 01. Bei dem Bauteil 17 kann es sich beispielsweise wie in den Fig. 1 bis Fig. 3 dargestellt um einen beispielsweise den Lichtquellen 14 des zur Erfüllung wenigstens einer Lichtfunktion der Kraftfahrzeugleuchte 01 vorgesehenen mindestens einen Leuchtmittels 05 zugeordneten Reflektor 18 handeln.

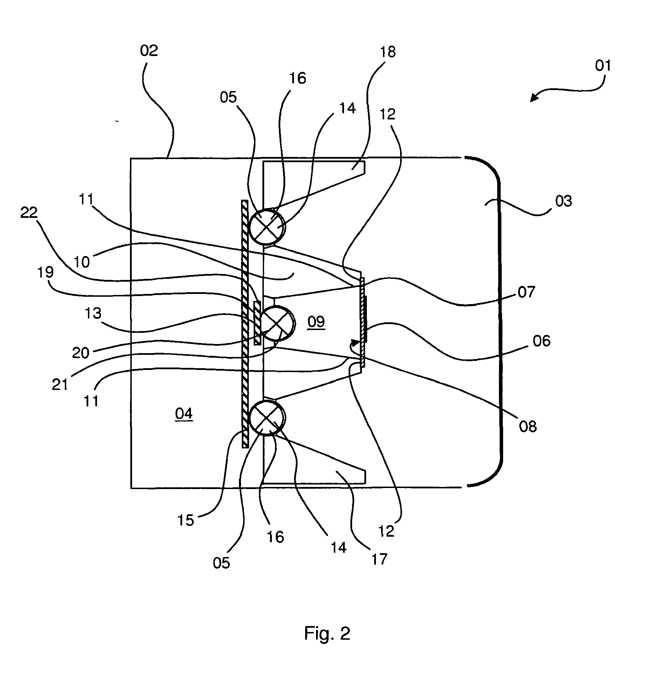

Bei der in Fig. 2 dargestellten ersten Ausführungsform der Kraftfahrzeugleuchte 01 umfassen die Mittel 13 zum Einstrahlen von Licht in die vermittels der Folie 07 an ihrer Lichtöffnung 08 verschlossene Ausnehmung 09 mindestens ein in der Ausnehmung 09 beherbergtes, die Hinterleuchtung der Grafik 06 besorgendes Leuchtmittel 19. Das Leuchtmittel 19 umfasst vorzugsweise mindestens eine Lichtquelle 20. Als Lichtquelle 20 können wenigstens eine Lichtemittierende Diode (LED) 21 und/oder mindestens ein LED-Chip sowie gegebenenfalls zumindest ein Lichtleiter vorgesehen sein. Auch kann das Leuchtmittel 19 eine Platine 22 zur elektrischen Kontaktierung sowie Befestigung der Lichtquelle 20 umfassen.

Auf der Platine 22 können ebenso wie auf der gegebenenfalls vorgesehenen Platine 15 eines eine Lichtfunktion besorgenden Leuchtmittels 05 gegebenenfalls erforderliche Elektronikbauelemente zur Strom- und/oder Spannungsversorgung der Lichtquellen 20 bzw. 14 untergebracht und elektrisch kontaktiert sein.

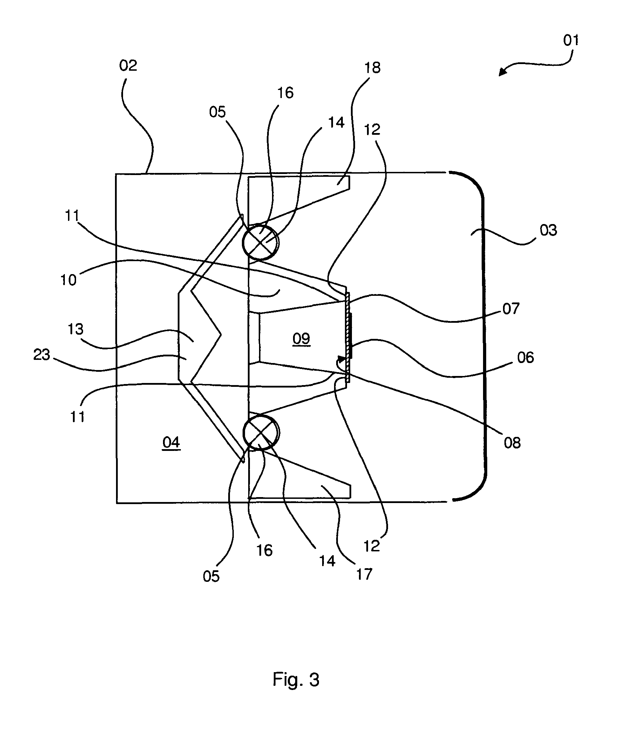

Bei der in Fig. 3 dargestellten zweiten Ausführungsform der Kraftfahrzeugleuchte 01 umfassen die Mittel 13 zum Einstrahlen von Licht in die vermittels der Folie 07 an ihrer Lichtöffnung 08 verschlossene Ausnehmung 09 wenigstens einen Licht von einem Leuchtmittel 05 von einer der Lichtöffnung 08 abgewandten Seite her in die Ausnehmung 09 reflektierenden Reflektor 23.

Bei der in Fig. 3 dargestellten zweiten Ausführungsform der Kraftfahrzeugleuchte 01 ist das mindestens eine Leuchtmittel 05, dessen Licht von einer der Lichtöffnung 08 abgewandten Seite her in die Ausnehmung 09 eingestrahlt wird, zur Besorgung mindestens einer Lichtfunktion der Kraftfahrzeugleuchte 01 vorgesehen.

Alternativ oder zusätzlich können die Mittel 13 zum Einstrahlen von Licht in die vermittels der Folie 07 an ihrer Lichtöffnung 08 verschlossene Ausnehmung 09 wenigstens einen Licht von mindestens einem Leuchtmittel 05 von einer der Lichtöffnung 08 abgewandten Seite her in die Ausnehmung 09 leitenden Lichtleiter umfassen.

Wichtig ist hervorzuheben, dass die Ausnehmung 09 beispielsweise wie die gesamte, der Lichtscheibe 03 zugewandte Oberfläche des Reflektors 18 zumindest an ihren diese umgebenden Wandungen 11 mit einer reflektierenden Oberfläche versehen sein kann.

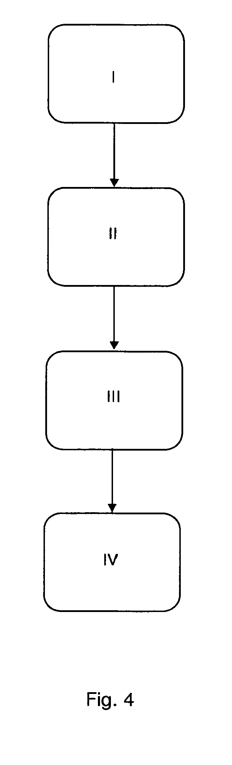

Ein in Fig. 4 im Ablauf seiner Verfahrensschritte dargestelltes Verfahren zur Herstellung einer zuvor beschriebenen Kraftfahrzeugleuchte 01 sieht im Wesentlichen vier Verfahrensschritte I, II, III und IV vor.

In einem ersten Verfahrensschritt I wird die Folie 07 beispielsweise in einem Druckverfahren mit der Grafik 06 versehen. Die Grafik 06 kann dabei als ein Negativ oder als ein Positiv ausgebildet sein.

In einem darauf folgenden zweiten Verfahrensschritt II wird die mit der Grafik 06 versehene Folie 07 lage- und positionsrichtig in ein Spritzgießwerkzeug eingebracht. Die Folie 07 kann dabei im Spritzgieß-Werkzeug mittels Vakuum lage- und positionsrichtig festgehalten werden.

In einem sich hieran anschließenden dritten Verfahrensschritt III ist vorgesehen, die Folie 07 zumindest mit der von außerhalb des Leuchteninnenraums 04 sichtbaren Partie 10 der Kraftfahrzeugleuchte 01 mit einem Spritzgießwerkstoff unter Aussparung der Ausnehmung 09 mit der mindestens einen durch die Folie 07 abgedeckten Lichtöffnung 08 durch Freilassung zumindest eines mit der Grafik versehenen Teils der Folie von dem Spritzgießwerkstoff zu hinterspritzen. Das Spritzgieß-Werkzeug kann dabei so ausgebildet sein, dass es zumindest den mit der Grafik 06 versehenen Teil der Folie 07 frei von dem für die durch Spritzgießen herzustellende Partie 10 vorgesehenen Spritzgießwerkstoff hält. Die Folie 07 kann dabei nur in demjenigen Bereich der Partie 10 vorgesehen sein, in dem die hinterleuchtete Grafik 06 vorgesehen ist.

In einem dann folgenden vierten Verfahrensschritt IV werden beim Zusammenbau der Kraftfahrzeugleuchte 01 Mittel 13 zum Einstrahlen von Licht in die vermittels der Folie 07 an ihrer Lichtöffnung 08 verschlossene Ausnehmung 09 eingebracht.

Es ist ersichtlich, dass die Erfindung in jedem Fall verwirklicht ist, indem eine von außerhalb der Kraftfahrzeugleuchte 01 beispielsweise durch die Lichtscheibe 03 hindurch sichtbare Partie 10, beispielsweise ein von der Kraftfahrzeugleuchte 01 beherbergtes Bauteil 17, mit einer eine Lichtöffnung 08 aufweisenden Ausnehmung 09 versehen ist, in die von einer von der Lichtöffnung 08 verschiedenen Seite Licht eingestrahlt werden kann, wobei die Lichtöffnung 08 durch eine vermittels Spritzgießen mit der Partie 10 verbundene, mit einer Grafik 06 versehene Folie 07 abgedeckt ist.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Leuchtengehäuse
- 03: Lichtscheibe
- 04: Leuchteninnenraum
- 05: Leuchtmittel
- 06: hinterleuchtete Grafik
- 07: Folie
- 08: Lichtöffnung
- 09: Ausnehmung
- 10: von außerhalb des Leuchteninnenraums sichtbare Partie
- 11: Wandung
- 12: die Ausnehmung umgebender Teil der Partie
- 13: Mittel zum Einstrahlen von Licht in die vermittels der Folie an ihrer Lichtöffnung verschlossene Ausnehmung
- 14: Lichtquelle
- 15: Platine
- 16: Lichtemittierende Diode (LED)
- 17: Bauteil
- 18: Reflektor
- 19: Leuchtmittel
- 20: Lichtquelle
- 21: Lichtemittierende Diode (LED)
- 22: Platine
- 23: Reflektor

- I: erster Verfahrensschritt
- II: zweiter Verfahrensschritt
- III: dritter Verfahrensschritt
- IV: vierter Verfahrensschritt

## Patentansprüche

1. Kraftfahrzeugleuchte (01) mit:
- einem von einem Leuchtengehäuse (02) und einer Lichtscheibe (03) umschlossenen Leuchteninnenraum (04),
- mindestens einem in dem Leuchteninnenraum (04) untergebrachten Leuchtmittel (05) zur Erfüllung mindestens einer Lichtfunktion,
- zumindest einer von außerhalb des Leuchteninnenraums (04) sichtbaren, hinterleuchteten Grafik (06),
- mindestens einer von außerhalb des Leuchteninnenraums (04) sichtbare, mit wenigstens einer Ausnehmung (09) versehen Partie (10),
- welche wenigstens eine Ausnehmung (09) zumindest eine Lichtöffnung (08) aufweist,
- welche zumindest eine Lichtöffnung (08) von wenigstens einer Folie (07) abgedeckt ist,
- welche wenigstens eine Folie mit der zumindest einen Grafik (06) versehen ist,
wobei die Folie (07) unter Freilassung wenigstens der Grafik (06) mit den die Ausnehmung (09) umgebenden Wandungen (11) und/oder dem die Ausnehmung (09) umgebenden Teil (12) der Partie (10) durch Spritzgießen verbunden ist, sowie
- Mitteln (13) zum Einstrahlen von Licht in die vermittels der Folie (07) an ihrer Lichtöffnung (08) verschlossene Ausnehmung (09), wobei
- die Mittel (13) zum Einstrahlen von Licht in die vermittels der Folie (07) an ihrer Lichtöffnung (08) verschlossene Ausnehmung (09) wenigstens einen Licht von mindestens einem Leuchtmittel (05) von einer der Lichtöffnung (08) abgewandten Seite her in die Ausnehmung (09) leitenden Lichtleiter und/oder wenigstens einen Licht von einem Leuchtmittel (05) von einer der Lichtöffnung (08) abgewandten Seite her in die Ausnehmung (09) reflektierenden Reflektor (23) umfassen.

2. Kraftfahrzeugleuchte nach Anspruch 1,
**dadurch gekennzeichnet,**
**dass** die Partie (10) und damit einhergehend die Grafik (06) durch die Lichtscheibe (03) hindurch von außerhalb des Leuchteninnenraums (04) sichtbar sind, wobei die Lichtöffnung (08) vorzugsweise der Lichtscheibe (03) zugewandt ist.

3. Kraftfahrzeugleuchte nach Anspruch 1 oder 2,
**dadurch gekennzeichnet,**
**dass** die Partie (10) opak oder transparent ist.

4. Kraftfahrzeugleuchte nach Anspruch 1, 2 oder 3,
**dadurch gekennzeichnet,**
**dass** die Folie (07) in einem Druckverfahren mit der Grafik (06) versehen ist.

5. Kraftfahrzeugleuchte nach einem der vorhergehenden Ansprüche,
**dadurch gekennzeichnet,**
**dass** die Partie (10) zumindest einen Teil des Leuchtengehäuses (02) umfasst.

6. Kraftfahrzeugleuchte nach einem der vorhergehenden Ansprüche,
**dadurch gekennzeichnet,**
**dass** die Partie (10) zumindest einen Teil mindestens eines im Leuchteninnenraum (04) untergebrachten Bauteils (17) der Kraftfahrzeugleuchte (01) umfasst.

7. Kraftfahrzeugleuchte nach Anspruch 6,
**dadurch gekennzeichnet,**
**dass** die Partie (10) zumindest einen Teil mindestens eines Reflektors (18) umfasst.

8. Kraftfahrzeugleuchte nach einem der vorhergehenden Ansprüche,
**dadurch gekennzeichnet,**
**dass** die Mittel (13) zum Einstrahlen von Licht in die vermittels der Folie (07) an ihrer Lichtöffnung (08) verschlossene Ausnehmung (09) mindestens ein in der Ausnehmung (09) beherbergtes, die Hinterleuchtung der Grafik (06) besorgendes Leuchtmittel (19) umfassen.

9. Kraftfahrzeugleuchte nach Anspruch 8,
**dadurch gekennzeichnet,**
**dass** das Leuchtmittel (19) wenigstens eine Lichtemittierende Diode (LED) (21) und/oder einen LED-Chip sowie gegebenenfalls einen Lichtleiter umfasst.

10. Kraftfahrzeugleuchte nach einem der vorhergehenden Ansprüche,
**dadurch gekennzeichnet,**
**dass** das mindestens eine Leuchtmittel (05), dessen Licht von einer der Lichtöffnung (08) abgewandten Seite her in die Ausnehmung (09) eingestrahlt wird, zur Besorgung mindestens einer Lichtfunktion der Kraftfahrzeugleuchte (01) vorgesehen ist.

11. Kraftfahrzeugleuchte nach einem der vorhergehenden Ansprüche,
**dadurch gekennzeichnet,**
**dass** die Ausnehmung (09) mit einer reflektierenden Oberfläche versehen ist.

12. Kraftfahrzeugleuchte nach einem der vorhergehenden Ansprüche,
**dadurch gekennzeichnet,**
**dass** die Grafik (06) als Negativ oder Positiv ausgebildet ist, wobei die Grafik (06) durchscheinend oder abschattend in einem ansonsten opaken oder transparenten, die Grafik (06) umgebenden Bereich der Folie (07) ausgebildet ist.

13. Verfahren zur Herstellung einer Kraftfahrzeugleuchte (01) nach einem der vorhergehenden Ansprüche,
**gekennzeichnet durch** die Verfahrensschritte:
- (I) Versehen einer Folie (07) mit einer zu hinterleuchtenden Grafik (06),
- (II) lage- und positionsrichtiges Einbringen der Folie (07) in ein Spritzgießwerkzeug,
- (III) Hinterspritzen der Folie (07) zumindest mit einer von außerhalb des Leuchteninnenraums (04) sichtbaren Partie (10) der Kraftfahrzeugleuchte (01) mit einem Spritzgießwerkstoff unter Aussparung einer Ausnehmung (09) mit mindestens einer **durch** die Folie (07) abgedeckten Lichtöffnung (08) **durch** Freilassung zumindest eines mit der Grafik (06) versehenen Teils der Folie (07) von dem Spritzgießwerkstoff und
- Einbringen von Mitteln (13) zum Einstrahlen von Licht in die vermittels der Folie (07) an ihrer Lichtöffnung (08) verschlossene Ausnehmung (09) beim Zusammenbau der Kraftfahrzeugleuchte (01).

14. Verfahren nach Anspruch 13,
**dadurch gekennzeichnet, dass**
- die Folie (07) in einem Druckverfahren mit der Grafik (06) versehen ist, und/oder
- das Spritzgieß-Werkzeug so ausgebildet ist, dass es zumindest den mit der Grafik (06) versehenen Teil der Folie (07) frei von dem für die durch Spritzgießen herzustellende Partie (10) vorgesehenen Spritzgießwerkstoff hält, und/oder
- die Folie nur in demjenigen Bereich der Partie (10) vorgesehen ist, in dem die hinterleuchtete Grafik (06) vorgesehen ist, und/oder
- die Folie (07) im Spritzgieß-Werkzeug mittels Vakuum festgehalten wird, und/oder
- ein IML-Verfahren (IML: In-Mould Labeling) oder ein eines IMD-Verfahren (IMD: In-Mould Decoration) zum Einbringen der Folie (07) in das Spritzgieß-Werkzeug und/oder zum Hinterspritzen der Folie (07) unter Freilassung zumindest des mit der Grafik (06) versehenen Teils der Folie (07) von dem Spritzgießwerkstoff angewandt wird.

## Claims

1. Motor vehicle lamp (01) comprising:
- a lamp interior (04) which is enclosed by a lamp housing (02) and a lens (03),
- at least one lighting means (05) for performing at least one lighting function, said lighting means (05) being accommodated by the lamp interior (04),
- at least one backlit graphic (06) that is visible from outside of the lamp interior (04),
- at least one section (10) that is provided with at least one recess (09) and that is visible from the outside of the lamp interior (04),
- said at least one recess (09) having at least one light opening (08),
- said at least one light opening (08) being covered by at least one film (07),
- with at least one graphic (06) being applied to the said at least one film (07),
wherein the film (07) is connected to the walls (11) enclosing the recess (09) and/or connected to the part (12) of the section (10) enclosing the recess (09), said connection being produced by means of injection moulding, leaving out at least the graphic (06), and further comprising
- means (13) for transmitting light into the recess (09) that is covered by the film (07) at the light opening (08), wherein
- the means (13) for transmitting light into the recess (09) that is covered by the film (07) at the light opening (08) comprises at least one light guide conducting light into the recess (09) from at least one lighting means (05) from a side that is averted from the light opening (08) and/or at least one reflector reflecting light into the recess (09) from at least one lighting means (05) from a side that is averted from the light opening (08).

2. Motor vehicle lamp according to claim 1,
**characterised in that**
the section (10) and, along with it, the graphic (06) are visible from the outside of the lamp interior (04) through the lens (03), wherein the light opening (08) preferably faces the lens (03).

3. Motor vehicle lamp according to claim 1 or 2,
**characterised in that**
the section (10) is opaque or transparent.

4. Motor vehicle lamp according to claim 1, 2, or 3
**characterised in that**
the graphic (06) is applied to the film (07) in a printing process.

5. Motor vehicle lamp according to one of the previous claims,
**characterised in that**
the section (10) comprises at least one part of the lamp housing (02).

6. Motor vehicle lamp according to one of the previous claims,
**characterised in that**
the section (10) comprises at least one part of at least one component (17) of the motor vehicle lamp (01), said component being accommodated in the lamp interior (04).

7. A motor vehicle lamp according to claim 6,
**characterised in that**
the section (10) comprises at least one part of at least one reflector (18).

8. Motor vehicle lamp according to one of the previous claims,
**characterised in that**
the means (13) for transmitting light into the recess (09) that is covered by the film (07) at the light opening (08) comprise at least one lighting means (19) accommodated in the recess (09), said lighting means providing the backlight for the graphic (06).

9. Motor vehicle lamp according to claim 8,
**characterised in that**
the lighting means (19) comprises at least one light-emitting diode (LED) (21) and/or one LED chip as well as one light guide, as the case may be.

10. Motor vehicle lamp according to one of the previous claims,
**characterised in that**
the at least one lighting means (05) which transmits light into the recess (09) from a side that is averted from the light opening (08) is intended for performing at least one lighting function of the motor vehicle lamp (01).

11. Motor vehicle lamp according to one of the previous claims,
**characterised in that**
the recess (09) is provided with a reflective surface.

12. Motor vehicle lamp according to one of the previous claims,
**characterised in that**
the graphic (06) is designed as a negative or a positive graphic, wherein the said graphic (06) is designed to be translucent or shading in an otherwise opaque or transparent area of the film (07) surrounding the graphic (06).

13. Method for producing a motor vehicle lamp (01) according to one of the previous claims,
**characterised by** the process steps:
- (I) applying a graphic (06), which is intended for being backlit, to a film (07),
- (II) placing the film (07) in an injection moulding machine in the correct alignment and position,
- (III) back injection moulding of the film (07) with at least one section (10) of the motor vehicle lamp (01) which section is visible from the outside of the lamp interior (04) by using an injection moulding material and leaving out a recess (09) with at least one light opening (08) that is covered by the film (07) by leaving at least one part of the film (07), which the graphic (06) is applied to, free from injection moulding material, and
- positioning means (13), which are used for transmitting light into the recess (09) that is covered by the film (07) at the light opening (08), said positioning taking place during the assembly of the motor vehicle lamp (01).

14. Method according to claim 13,
**characterised in that**
- the graphic (06) is applied to the film (07) in a printing process, and/or
- the injection moulding machine is designed to leave at least the part of the film (07) to which the graphic (06) is applied free from the injection moulding material intended for producing the section (10), and/or
- the film (07) is only provided **in that** part of the section (10) where the backlit graphic (06) is provided, and/or
- the film (07) is held in the injection moulding machine by means of a vacuum fastening, and/or
- an IML process (IML: in-mould labelling) or an IMD process (IMD: in-mould decoration) for placing the film (07) in the injection moulding machine and/or for back injection moulding the film (07), leaving at least the part of the film (07) to which the graphic (06) is applied free from the injection moulding material.

## Revendications

1. Lampe de véhicule automobile (01) comprenant :
- un volume intérieur de lampe (04) qui est entouré par un boîtier de lampe (02) et par une glace (03),
- au moins un moyen lumineux (05) logé à l'intérieur du volume intérieur de lampe (04) et destiné à remplir au moins une fonction de lumière,
- au moins un graphique (06) éclairé de derrière et visible depuis l'extérieur du volume intérieur de lampe (04),
- au moins une partie (10) visible depuis l'extérieur du volume intérieur de lampe (04) et pourvue d'au moins un évidement (09),
- ledit au moins un évidement (09) présentant au moins une ouverture de lumière (08),
- ladite au moins une ouverture de lumière (08) étant recouverte par au moins une feuille (07),
- ladite au moins une feuille étant pourvue dudit au moins un graphique (06),
ladite feuille (07), en laissant découvert au moins ledit graphique (06), étant reliée par moulage par injection aux parois (11) entourant ledit évidement (09) et/ou à la portion (12) de ladite partie (10), qui entoure ledit évidement (09), ainsi que
- des moyens (13) d'émission de lumière dans ledit évidement (09) fermé sur son ouverture de lumière (08) par l'intermédiaire de ladite feuille (07),
- lesdits moyens (13) d'émission de lumière dans ledit évidement (09) fermé sur son ouverture de lumière (08) par l'intermédiaire de ladite feuille (07) comprenant au moins un guide de lumière qui guide, dans ledit évidement (09), de la lumière d'au moins un moyen lumineux (05) depuis une face montrant dans la direction opposée à ladite ouverture de lumière (08), et/ou au moins un réflecteur (23) qui réfléchit, dans ledit évidement (09), de la lumière d'un moyen lumineux (05) depuis une face montrant dans la direction opposée à ladite ouverture de lumière (08).

2. Lampe de véhicule automobile selon la revendication 1, **caractérisée par le fait que** ladite partie (10) et, de pair avec celle-ci, ledit graphique (06) sont visibles à travers ladite glace (03) depuis l'extérieur du volume intérieur de lampe (04), ladite ouverture de lumière (08) étant de préférence tournée vers ladite glace (03).

3. Lampe de véhicule automobile selon la revendication 1 ou 2, **caractérisée par le fait que** ladite partie (10) est opaque ou transparente.

4. Lampe de véhicule automobile selon la revendication 1, 2 ou 3, **caractérisée par le fait que** ladite feuille (07) est pourvue du graphique (06) dans un procédé d'impression.

5. Lampe de véhicule automobile selon l'une quelconque des revendications précédentes, **caractérisée par le fait que** ladite partie (10) comprend au moins une partie dudit boîtier de lampe (02).

6. Lampe de véhicule automobile selon l'une quelconque des revendications précédentes, **caractérisée par le fait que** ladite partie (10) comprend au moins une partie d'au moins un composant (17) de la lampe de véhicule automobile (01), qui est logé à l'intérieur du volume intérieur de lampe (04).

7. Lampe de véhicule automobile selon la revendication 6, **caractérisée par le fait que** ladite partie (10) comprend au moins une partie d'au moins un réflecteur (18).

8. Lampe de véhicule automobile selon l'une quelconque des revendications précédentes, **caractérisée par le fait que** lesdits moyens (13) d'émission de lumière dans ledit évidement (09) fermé sur son ouverture de lumière (08) par l'intermédiaire de ladite feuille (07) comprennent au moins un moyen lumineux (19) qui est logé dans ledit évidement (09) et sert à éclairer de derrière ledit graphique (06).

9. Lampe de véhicule automobile selon la revendication 8, **caractérisée par le fait que** ledit moyen lumineux (19) comprend au moins une diode émettrice de lumière (DEL) (21) et/ou une puce de DEL ainsi que, le cas échéant, un guide de lumière.

10. Lampe de véhicule automobile selon l'une quelconque des revendications précédentes, **caractérisée par le fait que** ledit au moins un moyen lumineux (05) dont la lumière est émise dans ledit évidement (09) depuis une face montrant dans la direction opposée à ladite ouverture de lumière (08), est prévu pour remplir au moins une fonction de lumière de la lampe de véhicule automobile (01).

11. Lampe de véhicule automobile selon l'une quelconque des revendications précédentes, **caractérisée par le fait que** ledit évidement (09) est pourvu d'une surface réfléchissante.

12. Lampe de véhicule automobile selon l'une quelconque des revendications précédentes, **caractérisée par le fait que** ledit graphique (06) est réalisé en tant que négatif ou positif, le graphique (06) étant réalisé de manière translucide ou ombrageante dans une zone de la feuille (07), qui entoure ledit graphique (06) et qui, à part cela, est opaque ou transparente.

13. Procédé de fabrication d'une lampe de véhicule automobile (01) selon l'une quelconque des revendications précédentes, **caractérisé par** les étapes de procédé :
- (I) munir une feuille (07) d'un graphique (06) à éclairer de derrière,
- (II) introduire à emplacement et position exacts ladite feuille (07) dans un moule pour injection,
- (III) surmouler par injection ladite feuille (07) au moins d'une partie (10) de la lampe de véhicule automobile (01), qui est visible depuis l'extérieur du volume intérieur de lampe (04), à l'aide d'un matériau à mouler par injection, en ménageant un évidement (09) avec au moins une ouverture de lumière (08) recouverte par ladite feuille (07), en laissant dépourvue dudit matériau à mouler par injection au moins une partie de la feuille (07), qui est pourvue du graphique (06), et
- introduire, lors de l'assemblage de la lampe de véhicule automobile (01), des moyens (13) d'émission de lumière dans ledit évidement (09) fermé sur son ouverture de lumière (08) par l'intermédiaire de ladite feuille (07).

14. Procédé selon la revendication 13, **caractérisé par le fait que**
- ladite feuille (07) est pourvue dudit graphique (06) dans un procédé d'impression et/ou
- ledit moule pour injection est réalisé de manière à maintenir dépourvue du matériau à mouler par injection au moins la partie de la feuille (07), qui est pourvue du graphique (06), matériau qui est prévu pour la partie (10) à réaliser par moulage par injection, et/ou
- ladite feuille n'est prévue que dans la portion de la partie (10), dans laquelle est prévu ledit graphique (06) éclairé de derrière, et/ou
- ladite feuille (07) est retenue par le vide dans ledit moule pour injection, et/ou
- on met en oeuvre un procédé IML (IML : in-mould labeling) ou un procédé IMD (IMD : in-mould decoration) pour introduire la feuille (07) dans le moule pour injection et/ou pour surmouler par injection ladite feuille (07) en laissant dépourvue dudit matériau à mouler par injection au moins la partie de la feuille (07), qui est pourvue du graphique (06).
